(19) Europäisches Patentamt
European Patent Office
Office européen des brevets

(11) **EP 2 248 885 A1**

(12) **EUROPEAN PATENT APPLICATION**
published in accordance with Art. 153(4) EPC

(43) Date of publication:
**10.11.2010 Bulletin 2010/45**

(51) Int Cl.:
***C12G 3/04*** (2006.01)

(21) Application number: **09712658.5**

(22) Date of filing: **19.02.2009**

(86) International application number:
**PCT/JP2009/052842**

(87) International publication number:
**WO 2009/104660 (27.08.2009 Gazette 2009/35)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **19.02.2008 JP 2008038084**
**19.02.2008 JP 2008038089**
**19.02.2008 JP 2008038093**

(71) Applicant: **Suntory Holdings Limited
Kita-ku
Osaka-shi
Osaka 530-8203 (JP)**

(72) Inventors:
• **MATSUBAYASHI, Hideki
Kawasaki-shi
Kanagawa 211-0067 (JP)**
• **YOSHIMOTO, Seiko
Kawasaki-shi
Kanagawa 211-0067 (JP)**

(74) Representative: **Vossius & Partner
Siebertstrasse 4
81675 München (DE)**

(54) **ALCOHOLIC DRINK CONTAINING FRUIT JUICE**

(57)    The present invention provides an alcohol-containing fruit juice beverage containing 9 v/v% or more of alcohol and a fruit juice selected from the group consisting of apple juice, grapefruit juice and grape juice, wherein the beverage further contains (A) at least 5.0 mg/100 ml of chlorogenic acids when the fruit juice is apple juice, (B) at least 60 mg/100 ml of malic acid when the fruit juice is grapefruit juice, or (C) at least 30 mg/100 ml of potassium ions when the fruit juice is grape juice, whereby an irritation that is distinctive of alcohol and originates from the high concentration of alcohol is reduced and the flavor of mature fruit is enhanced.

**Description**

TECHNICAL FIELD

The present invention relates to high-alcoholic beverages containing apple juice, grapefruit juice or grape juice. In particular, the present invention relates to beverages having an alcohol content of 9 v/v% or higher and containing a specific amount of chlorogenic acids when the fruit juice is apple juice, a specific amount of malic acid when the fruit juice is grapefruit juice, or a specific amount of potassium ions when the fruit juice is grape juice. A fruit juice-containing alcoholic beverage of the present invention is reduced in an irritation (including irritating smell) that is distinctive of alcohol and originates from a high concentration of alcohol. A fruit juice-containing alcoholic beverage of the present invention that uses apple juice has an enhanced sweet syrup-like taste similar to the taste of a mature apple. A fruit juice-containing alcoholic beverage of the present invention that uses grapefruit juice has an enhanced fruity and fresh flavor (ester-like flavor) of a mature grapefruit. A fruit juice-containing alcoholic beverage of the present invention that uses grape juice has an enhanced fruity and fresh flavor (ester-like flavor) of a mature grape, providing a deep and mellow savor. The fruit juice-containing alcoholic beverage of the present invention is a beverage having an enhanced fruity and fresh flavor (sweet syrup-like taste, ester-like flavor) of a mature fruit, which is a pleasant aroma of alcoholic beverages, and a novel taste with a significantly pleasant savor.

BACKGROUND ART

Alcoholic beverages are widely consumed as a beverage for pleasure or a beverage for medical use. Since alcohol has disinfection and antibacterial effects, it may be added to improve the shelf life of a beverage and food. However, many alcoholic beverages or alcohol-containing beverages (hereinafter, they are referred to as "alcoholic beverage") have a strong irritation that is a distinctive feature of alcohol (the irritation is sometimes referred to as "alcoholic irritation" in this specification), and are disagreeable to some people because of such an irritation.
Various attempts have been made to reduce or eliminate such an alcohol irritation. For example, it is known that whiskey becomes mellow and drinkable after a long period of maturation of about 10-100 years. On the basis of such a finding obtained by maturation of whiskey, it is proposed to add a polyphenol, especially lyoniresinol, sinapaldehyde, and coniferyl aldehyde, which are solvent extraction products of barrels used in maturation, to an alcoholic beverage so that a peroxide such as hydrogen peroxide that is excessively produced in the mouth by consumption of an alcohol beverage is eliminated to reduce an irritation originating from alcohol (Patent Document 1).
The following methods are also proposed to reduce the irritation that is distinctive of alcohol: a method in which sucralose is added to an alcoholic beverage to reduce bitterness and burning sensation originating from alcohol in the alcoholic beverage (Patent Document 2); a method in which glucan comprising a moiety with an inner branched cyclic structure and a moiety with an outer branched cyclic structure and having a degree of polymerization of at least 50 is added to an alcohol-containing food or beverage so that a smell and an irritation of alcohol are moderated to make the food and beverage mild (Patent Document 3); a method in which betaine, which is an amino acid, is added to reduce an irritating smell of an alcohol-containing food or beverage (Patent Document 4); and a method in which paradicsom paprika fruit is added to eliminate an unpleasant smell of an alcoholic beverage so that an aftertaste and a taste are improved (Patent Document 5).
Further, it is reported that an irritant sensation of alcohol in a fruit juice-containing alcoholic beverage with a percentage of fructose in a total sugar in the beverage of at least 65 w/w%, preferably at least 75 w/w%, is masked as a result of a combination of the development of the sweet taste of fructose and the development of the unpleasant taste of alcohol to provide a smooth and mild taste (Patent Document 6).
Further, a distilled alcoholic beverage for use in the production of fruit wine has a disadvantage in that a fruit flavor is spoiled by an irritating smell of alcohol. To solve this problem, a wine for use in the production of fruit wine that has an alcohol concentration of at least 20% and is obtained by addition of alcohol to wine and then mixing it is proposed (Patent Document 7).
There is also proposed an alcoholic beverage prepared by mixing alcohol with a fruit juice such that the resulting alcoholic beverage has an alcohol content of 6% or lower and a fruit juice content of 70% or more (Patent Document 8).
It is known that grape juice contains a large amount of tartaric acid and when grape juice is made into a concentrated fruit juice, tartar is precipitated. A known method to avoid such precipitation is a method in which grape juice is stored in the form of a straight fruit juice, or grape juice is treated with an ion exchange resin so that potassium ions are adsorbed by a straight fruit juice to 100 ppm or lower to inhibit precipitation of tartar (Non-patent Document 1).

Patent Document 1: JP 2006-271273 A
Patent Document 2: JP 08-224075 A
Patent Document 3: JP 2003-289824 A

Patent Document 4: JP 2003-204779 A
Patent Document 5: JP 10-313849 A
Patent Document 6: JP 2005-192473 A
Patent Document 7: JP 2003-210154 A
Patent Document 8: JP 2008-95068 A
Non-patent Document 1: Kaju/kajitsuinryo jiten (Dictionary of Fruit Juices and Fruit Beverages), p. 145, Shadanhojin Nihon Kaju Kyokai (Japan Fruit Juice Association), Asakura Publishing Co., Ltd., 1997

DISCLOSURE OF THE INVENTION

PROBLEM TO BE SOLVED BY THE INVENTION

As a result of extensive and intensive studies of methods of reducing an irritation that is distinctive of alcohol in high-alcoholic beverages (beverages having an alcohol content of 9 v/v% or higher), the present inventors had already found that the irritation distinctive of alcohol could be reduced by addition of a high concentration of fruit juice such that the resulting alcoholic beverage had a percentage of fruit juice of 80% or higher. The high-alcoholic beverage containing a fruit juice at a high concentration was very easy to drink without sensing any irritation of alcohol (including irritating smell). However, the alcoholic beverage was not so satisfactory from the point of view of a pleasant aroma of an alcoholic beverage, namely a fruity and fresh ester-like flavor.

An object of the present invention is to provide a high-alcoholic beverage having a reduced irritation of alcohol and an enhanced fruity and fresh flavor of a mature fruit (mature sweet syrup-like taste, ester-like flavor), which is a pleasant aroma of an alcoholic beverage, to have excellent fruitiness and savor that were not available in the past. Especially, the present invention has an object to provide an alcoholic beverage using apple juice, grapefruit juice or grape juice that allows a consumer of the beverage to enjoy the flavor of a mature fruit.

MEANS FOR SOLVING THE PROBLEM

The present inventors extensively and intensively studied the above problems with a view of solving them. Consequently, they found that in a case of a high-alcoholic beverage using apple juice, addition of a specific amount of chlorogenic acids to the beverage could provide the syrup-like taste of a mature apple to the beverage. Chlorogenic acids are a component that is contained in a large amount in an unripe apple and the like. Chlorogenic acids are known as a component that causes bitter and astringent tastes. Thus, it was surprising that chlorogenic acids could provide the sweet syrup-like taste of a mature apple.

The present inventors also found with surprise that in a case of a high-alcoholic beverage using grapefruit juice, addition of a specific amount of malic acid to the beverage could enhance the deep and mellow fruit flavor (ester-like flavor) similar to that of a mature grapefruit.

The present inventors also found that in a case of a high-alcoholic beverage using grape juice, addition of a specific amount of potassium ions could enhance the pleasant fresh ester-like flavor of alcoholic beverages and the deep and mellow flavor (ester-like savor) of a mature grape. It is known that in general grape juice contains a large mount of tartaric acid, and that when grape juice is stored for a long time, tartar is precipitated in the juice. Surprisingly, in the high-alcoholic beverage of grape juice containing a specific amount of potassium ions that was obtained in the present invention, no precipitation of tartar was observed even after long-term storage of the beverage.

Specifically, the present invention is:

1. A fruit juice-containing alcoholic beverage having an alcohol content of 9 v/v% or higher, wherein the fruit juice is one of apple juice, grapefruit juice and grape juice, and the fruit juice-containing alcoholic beverage contains (A) 5.0 mg/100 ml or more of chlorogenic acids when the fruit juice is apple juice, (B) 60 mg/100 ml or more of malic acid when the fruit juice is grapefruit juice, or (C) 30 mg/100 ml or more of potassium ions when the fruit juice is grape juice.
2. The fruit juice-containing alcoholic beverage of 1, wherein the fruit juice is contained in an amount of 100% or more, based on a percentage of fruit juice.
3. The fruit juice-containing alcoholic beverage of 1 or 2, wherein a ratio (B/A) of (B) a percentage of fruit juice (%) to (A) an alcohol concentration (v/v%) in the beverage is 11.5 or higher.
4. The fruit juice-containing alcoholic beverage of any one of 1 to 3, wherein the fruit juice is apple juice, and the chlorogenic acids are added in the form of a fruit juice extract or a concentrate.
5. The fruit juice-containing alcoholic beverage of any one of 1 to 3, wherein the fruit juice is grapefruit juice, and the malic acid is added in the form of a fruit juice extract or a concentrate.
6. The fruit juice-containing alcoholic beverage of any one of 1 to 3, wherein the fruit juice is grape juice, and the potassium ion is added in the form of a fruit juice extract or a concentrate.

7. A dilution-type alcoholic beverage obtained by dilution of the alcoholic beverage of any one of 1 to 6 with a diluent solution.

ADVANTAGEOUS EFFECT OF THE INVENTION

The present invention provides a high-alcoholic beverage having a novel savor in which the irritation distinctive of alcohol is reduced or eliminated and the pleasant aroma (sweet syrup-like taste, ester-like flavor) of a mature fruit is enhanced. The high-alcoholic beverage of the present invention that uses apple juice has a novel savor that is a sweet syrup-like taste similar to the taste of a mature apple. The high-alcoholic beverage of the present invention that uses grapefruit juice has a novel flavor of a mature grapefruit in which the pleasant ester-like flavor of alcoholic beverages is enhanced. The high-alcoholic beverage of the present invention that uses grape juice has a novel flavor of a mature grape in which the pleasant ester-like flavor of alcoholic beverages is enhanced.

BEST MODE FOR CARRYING OUT THE INVENTION

A feature of the present invention is that a specific fruit juice and a specific component are added in combination to a beverage having a high concentration of alcohol (in this specification, the beverage is sometimes referred to as "high-alcoholic beverage") so that the pleasant aroma of a mature fruit (ester-like flavor, sweet syrup-like taste) is provided to the beverage. Especially, the high-alcoholic beverage of the present invention containing apple juice contains 5.0 mg/100 ml or more of chlorogenic acids, the high-alcoholic beverage of the present invention containing grapefruit juice contains 60 mg/100 ml or more of malic acid, and the high-alcoholic beverage of the present invention containing grape juice contains 30 mg/100 ml or more of potassium ions, whereby a flavor of a mature fruit (ester-like flavor, sweet syrup-like taste) of the respective kinds of fruits is provided. This is an effect of the present invention.

The term "high concentration of alcohol" as used herein refers to an alcohol contained at a concentration that an alcohol irritation is strongly sensed; specifically an alcohol of 9 v/v% or higher, preferably 12 v/v% or higher, more preferably 16 v/v% or higher. In the alcoholic beverage of the present invention, the irritation (irritating smell) distinctive of a high concentration of alcohol is reduced. Preferably, an upper limit of alcohol contained is 30 v/v% or lower, especially 24 v/v% or lower.

Alcohol-containing beverages that can be used in the present invention are not particularly limited, and may be any beverage that contains a drinkable alcohol. Examples include brewed alcohols, spirits (e.g., spirits such as gin, vodka, rum, tequila, and new spirits, and raw material alcohols), liquors, whiskeys (e.g., whiskey, brandy), shochu (*Korui* and *Otsurui* (categories of shochu under the applicable law)), and brews such as refined sake, wine, and beer. These alcohol-containing beverages may be used singly or in combination of two or more. Types of alcohol-containing beverages may be appropriately selected according to a desired flavor. In the high-alcoholic beverage of the present invention that uses apple juice, use of spirits, rum or the like is preferred, because spirits and rum complement the aroma of apple juice and a savor provided by the present invention, such as the syrup-like taste of a mature apple. In the beverage using grapefruit juice or grape juice, use of spirits, brandy or the like is also preferred, because spirits and brandy complement the aroma and taste of grapefruit and grape.

In the alcoholic beverage of the present invention, chlorogenic acids, when apple juice is used in the beverage, malic acid, when grapefruit juice is used in the beverage, or potassium ions, when grape juice is used in the beverage, are added to the alcohol-containing beverage such that the resulting beverage contains the chlorogenic acids, malic acid or potassium ions in a predetermined amount, whereby the taste of the high-alcoholic beverage can be improved.

(Apple juice-containing alcoholic beverage)

The amount of chlorogenic acids contained in the beverage using apple juice is 5.0 mg/100 ml or more, preferably 5.5 mg/100 ml or more. When chlorogenic acids are contained in an amount that is smaller than 5.0 mg/100 ml, the syrup-like taste of a mature apple, which is a feature of the present invention, cannot be provided sufficiently. An upper limit of the amount of chlorogenic acids contained may be appropriately determined on the basis of a desired savor, preference and the like. Since chlorogenic acids are known as a source of bitter and astringent tastes, when an excessive amount of chlorogenic acids is contained, the taste of the alcoholic beverage may be destroyed. Thus, the amount of chlorogenic acids contained is normally about 100 mg/100 ml or smaller, preferably 50 mg/100 ml or smaller.

It is known that in general chlorogenic acids are thermally unstable and decompose easily. Since the alcoholic beverage of the present invention contains a high concentration of alcohol, no heat sterilization is required; thus, the problem of decomposition of chlorogenic acid by heating is less likely to arise. Further, the high-alcoholic beverage of the present invention has high preservation stability; therefore, a deterioration in quality, such as a change in the savor, is less likely to occur. In other words, the high-alcoholic beverage of the present invention maintains the syrup-like taste and the distinctive savor of a mature apple for a long time to allow a consumer of the beverage to enjoy the taste and the savor.

Chlorogenic acids to be used in the present invention may be an extract from a natural product containing chlorogenic acids, especially an extract from a plant, or a purified product thereof, or an industrial product obtained by chemical synthesis. Chlorogenic acids extracted from plants are especially preferred. Examples of plants that contain chlorogenic acids include raw coffee beans, leaves of Nandina and apples. Examples of chlorogenic acids extracted from plants that can be used in the present invention include purified products extracted from these plants and extracts from the plants (e.g., fruit juice). Since chlorogenic acids are to be added to a high-alcoholic beverage of an apple savor in the present invention, use of an extract from an apple is preferred. Examples of apple extracts that can be used include apple juice (especially a concentrated fruit juice having an increased concentration of chlorogenic acid) and commercially-available apple extracts containing chlorogenic acid at a high concentration (e.g., "Apple Phenon" of The Nikka Whisky Distilling Co., Ltd.).

Specific examples of chlorogenic acids in the present invention include 3-caffeoylquinic acid, 4-caffeoylquinic acid, 5-caffeoylquinic acid, 3,4-dicaffeoylquinic acid, 3,5-dicaffeoylquinic acid, 4,5-dicaffeoylquinic acid, 3-feruloyl quinic acid, 4-feruloyl quinic acid, 5-feruloyl quinic acid and 3-ferulyl-4-caffeoylquinic acid. Chlorogenic acids may be made into salts thereof so that their solubility in water can be improved. In the present invention, any salt that can be used in foods may be used. Examples of base substances for forming such a salt include hydroxides of alkali metals such as lithium hydroxide, sodium hydroxide and potassium hydroxide; hydroxides of alkaline earth metals such as magnesium hydroxide and calcium hydroxide; ammonia; basic amino acids such as arginine, lysine, histidine and ornithine; and organic bases such as monoethanolamine, diethanolamine and triethanolamine. Hydroxides of alkali metals or alkaline earth metals are especially preferred. To prepare a high-alcoholic beverage of the present invention containing chlorogenic acids in the form of a salt, chlorogenic acids in the form of a salt may be added to a beverage, or chlorogenic acids and a component for forming a salt may be added separately to a beverage.

(Grapefruit juice-containing alcoholic beverage)

The amount of malic acid contained in the beverage using grapefruit juice is 60 mg/100 ml or more, preferably 100 mg/100 ml or more, more preferably 150 mg/100 ml or more. An amount of malic acid that is smaller than 60 mg/100 ml is not sufficient to improve the savor of grapefruit, to enhance the ester-like flavor, or to provide a sufficient mature fruit-like flavor. An upper limit of the amount of malic acid contained may be appropriately determined on the basis of a desired savor, preference and the like. An excessively high acidity of a high-alcoholic beverage may cause additive or synergistic action of a sour taste and an irritation distinctive of alcohol to deteriorate the taste of the high-alcoholic beverage. Thus, in general it is preferable to add malic acid such that the resulting high-alcoholic beverage has an acidity (a weight of malic acid in a 100-ml alcoholic beverage, based on citric acid) of preferably 10 g or smaller, more preferably 8 g or smaller. The amount of malic acid contained in the alcoholic beverage of the present invention was analyzed by adding perchloric acid and water to samples, filtering the mixtures, and subjecting the filtrates to high-performance liquid chromatography.

Malic acid to be used in the present invention is an organic acid that can be found in a wide range of plants, and is contained in a large amount in fruits such as apples and grapes. Types of malic acid that can be used in the present invention are malic acid and/or malates. Malates are not particularly limited, and any malate that is acceptable under the Food Sanitation Law can be used. Specific examples include sodium malate and potassium malate. These malates may be used singly or in combination of two or more. The form of malic acid to be used in the present invention is not particularly limited. Any commercially-available purified product may be used, or an extract of the plants, i.e., a juice of a fruit such as an apple and a grape or a concentrate thereof, may be added to the beverage of the present invention.

(Grape juice-containing alcoholic beverage)

The amount of potassium ions contained in the beverage using grape juice is 30 to 250 mg/100 ml, preferably 30 to 200 mg/100 ml, more preferably 30 to 150 mg/100 ml. An amount of potassium ions contained that is smaller than 30 mg/100 ml is not sufficient to improve the savor of a grape, to enhance the ester-like flavor, or to sufficiently provide a flavor similar to the taste of a mature fruit. On the other hand, when potassium ions are contained in an amount that is greater than 250 mg/100 ml, the beverage has a salty or harsh taste, and this may result in a deterioration in the taste of the high-alcoholic beverage.

Potassium ions to be used in the present invention are one of the essential minerals for living organisms, and are contained in a large amount in vegetables and fruits, especially fruits such as a grapefruit, a watermelon and a melon. Potassium salts may be used as the potassium ions in the present invention. Potassium salts are not particularly limited, and any potassium salt that is acceptable under the Food Sanitation Law may be used. Specific examples include potassium chloride, potassium carbonate, potassium citrate and potassium malate. These potassium salts may be used singly or in combination of two or more. The form of potassium ions or potassium salts to be used in the present invention is not particularly limited. Any commercially-available purified product may be used, or an extract of the plants, i.e., a juice of a fruit such as a grapefruit and a melon or a concentrate thereof, may be added to the beverage of the present invention.

The alcoholic beverage of the present invention contains apple juice, grapefruit juice or grape juice, and allows a consumer of the beverage to enjoy the savor of the fruit. As necessary, a flavoring that has the flavor of the fruit may also be used in addition to the fruit juices in the alcoholic beverage of the present invention. Amounts of a fruit juice and a flavoring are not particularly limited, as long as the savor of the fruit can be enjoyed. Addition of a fruit juice such that the resulting high-alcoholic beverage has a percentage of fruit juice of 80% or more, preferably 100% or more, is preferred, because it reduces or eliminates the irritation of alcohol in the high-alcoholic beverage.

The alcoholic beverage of the present invention can be prepared using a straight fruit juice obtained from a fruit or a concentrated or diluted fruit juice thereof. From the point of view of preparation of an alcoholic beverage having a high percentage of fruit juice, use of a concentrated fruit juice of a fruit is preferred. Any of clear fruit juice, turbid fruit juice and semi-clear fruit juice can be used.

Cultivars of each fruit are not particularly limited. With regard to grape juice, for example, juices of grapes, such as *Neo-muscat* grapes and *Rosario bianco* grapes, juices of red grapes, such as *Delaware* grapes, *Kaiji* grapes and *Koshu* grapes, and juices of black grapes, such as *Pione* grapes and *Kyoho* grapes, can be used.

As necessary, a fruit juice other than apple juice, grapefruit juice and grape juice may be added to the alcoholic beverage of the present invention to an extent that the savor of the fruit is not damaged. Even when multiple kinds of fruit juices are used, it is preferable to adjust the total percentage of fruit juice to 80% or higher, especially 100% or higher.

In general, the term "percentage of fruit juice" refers to a relative concentration based on a straight fruit juice obtained by squeezing fruit as 100%, and can be converted in accordance with a reference level of sugar refractometer index Bx (˚Bx) for each fruit specified in the JAS standard (Japanese Agricultural Standard for fruit beverages). For example, the reference Bxs for grapefruit juice, grape juice and apple juice are 9˚, 11˚ and 10˚, respectively, according to the JAS standard. Thus, for example an apple juice of Bx 70˚ is of a seven-fold concentration.

The amount of fruit juice is normally expressed in % by weight (i.e., an amount of fruit juice (g) (w/w) per 100 g of the beverage) in many cases. However, in cases of an alcoholic beverage as in the present invention, a specific gravity (g/ml) of the beverage varies according to a concentration of alcohol. Thus, even when amounts of fruit juices that are used are the same, levels of a fruit juice content (% by weight) vary according to an alcohol content. For example in a case of using 10 g of concentrated apple juice (Bx 70˚ = seven-fold concentration), the amount of fruit juice in a 100-ml beverage with 9 v/v% of alcohol (specific gravity: 0.9967) is 70.2% by weight, and the amount of fruit juice in a 100-ml beverage with 24˚ of alcohol (specific gravity: 0.9787) is 71.5% by weight.

To avoid an effect of an alcohol concentration in a beverage, the conversion formula below using an amount (g) of concentrated fruit juice contained in 100 ml of an alcoholic beverage is used to calculate the "percentage of fruit juice" in the alcoholic beverage in the present invention. The concentration rate is to be calculated in accordance with the JAS standard.

$$\text{Percentage of fruit juice } (\%) = \langle \text{amount of concentrated fruit juice that is contained (g)} \times \text{concentration rate}\rangle / 100 \text{ ml} \times 100$$

The "percentage of fruit juice" as used in the present invention can also be expressed by indicating amino nitrogen in a beverage as an index. Specifically, the percentage of fruit juice can be expressed as a relative concentration with respect to an amount of amino nitrogen contained in a straight fruit juice, which is referred to as 100%. Amounts of amino nitrogen (mg/100 ml) in 100% fruit juices (straight fruit juice) from concentrated fruit juices are as follows (Van Slyke method): apple: (turbid) 9 mg, (clear) 7 mg; grape: (concord) 23 mg, (white grape) 3 mg, (*Kyoho* grape) 18 mg; and grapefruit: (turbid) 29 mg, (semi-clear) 23 mg, (clear) 26 mg. For example when amino nitrogen in an alcoholic beverage of the present invention made from a clear grapefruit juice and an alcohol is analyzed (Van Slyke method) and the result is 52 mg/100 ml, the percentage of fruit juice is 200%. An amount of amino nitrogen is generally expressed as an amount per 100 g of a beverage (mg/100 g), but an amount of amino nitrogen per 100 ml of an alcoholic beverage (mg/100 ml) is used herein to avoid effects of a concentration of alcohol in the beverage.

Preferably, the fruit juice-containing high-alcoholic beverage of the present invention contains a fruit juice in an amount (when a fruit juice other than apple, grapefruit and grape is contained, the amount includes an amount of the fruit juice) that is at least 11.5-fold, based on the percentage of fruit juice, with respect to the alcohol, so that the alcoholic irritation of the beverage can be eliminated almost completely. The expression "at least 11.5-fold, based on the percentage of fruit juice, with respect to the alcohol" as used herein indicates that the percentage of fruit juice per 1 v/v% of alcohol is at least 11.5-fold; in other words, the value of B/A is 11.5 or higher, where (A) is an alcohol concentration (v/v%) and (B) is a percentage of fruit juice (%) in the alcoholic beverage of the present invention.

Since the alcoholic beverage of the present invention contains a high concentration of alcohol, no thermal sterilization is required; thus, a deterioration in quality caused by heating such as a change in a savor can be avoided so that the original flavor of a fruit can be enjoyed.

Sugars, acids, a flavoring, vitamins, colorants, an antioxidant, a sweetening agent, an acidulant, an emulsifier, a preservative, a flavoring agent, extracts, a pH adjuster, a quality stabilizer or the like that are commonly added to alcohol-containing beverages may be added to the alcoholic beverage of the present invention in addition to various components (chlorogenic acids, malic acid, potassium ion), alcohol and fruit juices (apple juice, grapefruit juice, grape juice) to an extent that the foregoing properties are not damaged. However, as described above, the alcoholic beverage of the present invention allows a consumer of the beverage to enjoy the flavor of a mature fruit that was not available in the past, and sweetness derived from natural fruit, i.e., essential sweetness and deliciousness of fruit, can be enjoyed without addition of any sweetening agent or sugars. Thus, it is also an aspect of the present invention to enjoy sweetness and deliciousness derived from natural fruit without addition of any sweetening agent, sugars and the like. When another component is to be added, selection of a component that neither changes the sweet and sour tastes nor provides any strange taste is preferred to allow a consumer to enjoy essential deliciousness of the fruit. Specifically, it is preferable to select at least one of flavorings, colorants, antioxidants and the like.

The pH of the alcoholic beverage of the present invention is not particularly limited, but preferably the beverage is acidic in the point of view that the beverage is to contain a high concentration of fruit juice; namely, in the point of view of maintaining palatability as a fruit based beverage. Specifically, a pH of 2.0 to 5.0 is preferred, and a pH of 3.0 to 4.5 is more preferred.

The alcoholic beverage of the present invention may be consumed straight, or may be used as an alcoholic base of a dilution-type alcoholic beverage, which is a beverage that is diluted before it is consumed. The alcoholic beverage of the present invention can also be used straight as a fruit source for ice cream, yogurt and the like, or as an ingredient (fruit base) to be added to bread, candy and the like. In any of the forms, the irritant sensation and tangling sensation distinctive of alcohol are eliminated almost completely, making it possible to enjoy the pleasant flavor of a mature fruit (ester-like flavor, sweet syrup-like taste).

EXAMPLES

The following non-limiting examples describe the present invention in detail.

Reference Example 1 (Apple juice-containing alcoholic beverage)

Fruit juice-containing alcoholic beverages (alcohol concentration: 9 v/v%) having a percentage of fruit juice of 50%, 80% and 100% were produced using clear concentrated apple juice (Bx 70°; 7-fold concentration) and 59 v/v% alcohol (spirits). Tingling sensation of alcohol (irritation distinctive of alcohol, which gives the tingling sensation in the mouth) in the resulting fruit juice-containing alcohol was evaluated by four panelists using a four-point method (4 points: no tingling sensation was sensed, 3 points: almost no tingling sensation was sensed, 2 points: tingling sensation was slightly sensed, 1 point: tingling sensation was sensed), and the results were averaged.

The results were as follows: 1.25 points in the case of the percentage of fruit juice of 50%; 3.0 points in the case of the percentage of fruit juice of 80%; and 3.0 points in the case of the percentage of fruit juice of 100%. It was confirmed that the tingling sensation of alcohol could be reduced by addition of a high concentration of fruit juice such that the resulting beverage had a percentage of fruit juice of 80% or higher.

Reference Example 2 (Grapefruit juice-containing alcoholic beverage)

Fruit juice-containing alcoholic beverages (alcohol concentration: 9 v/v%) having a percentage of fruit juice of 50%, 80% and 100% were produced using clear concentrated grapefruit juice (Bx 63°) and 59 v/v% alcohol (spirits). Tingling sensation of alcohol (irritation distinctive of alcohol, which gives the tingling sensation in the mouth) in the resulting fruit juice-containing alcohol was evaluated by four panelists using a four-point method (4 points: no tingling sensation was sensed, 3 points: almost no tingling sensation was sensed, 2 points: tingling sensation was slightly sensed, 1 point: tingling sensation was sensed), and the results were averaged.

The results were as follows: 1.25 points in the case of the percentage of fruit juice of 50%; 3.0 points in the case of the percentage of fruit juice of 80%; and 3.0 points in the case of the percentage of fruit juice of 100%. It was confirmed that the tingling sensation of alcohol could be reduced by addition of a high concentration of fruit juice such that the resulting beverage has a percentage of fruit juice of 80% or higher.

Reference Example 3 (Grape juice-containing alcoholic beverage)

Fruit juice-containing alcoholic beverages (alcohol concentration: 9 v/v%) having a percentage of fruit juice of 50%, 80% and 100% were produced using clear concentrated white grape juice (Bx 66˚) and 59 v/v% alcohol (spirits). Tingling sensation of alcohol (irritation distinctive of alcohol, which gives the tingling sensation in the mouth) in the resulting fruit juice-containing alcohol was evaluated by four panelists using a four-point method (4 points: no tingling sensation was sensed, 3 points: almost no tingling sensation was sensed, 2 points: tingling sensation was slightly sensed, 1 point: tingling sensation was sensed), and the results were averaged.

The results were as follows: 1.25 points in the case of the percentage of fruit juice of 50%; 3.0 points in the case of the percentage of fruit juice of 80%; and 3.0 points in the case of the percentage of fruit juice of 100%. It was confirmed that the tingling sensation of alcohol could be reduced by addition of a high concentration of fruit juice such that the resulting beverage has a percentage of fruit juice of 80% or more.

Example 1 Apple juice-containing alcoholic beverage)

Four kinds of apple juice-containing alcoholic beverages having Brix of 22.7˚ and an acidity of 0.565 g/100 ml were produced using ingredients shown in Table 1 in amounts specified in Table 1. Tingling sensation of alcohol in the beverages thus produced was evaluated using the following four ranks: "◎" for a case in which no tingling sensation was sensed; "○" for a case in which almost no tingling sensation was sensed; "△" for a case in which tingling sensation was slightly sensed; and "×" for a case in which tingling sensation was sensed. The sweet syrup-like taste of a mature apple was also evaluated using the following four ranks based on Comparative Example 1 as a reference: "×" for a case in which the syrup-like taste was sensed less than that in Comparative Example 1; "△" for a case in which the level was the same as that in Comparative Example 1; "○" for a case in which the syrup-like taste was sensed slightly more than that in Comparative Example 1; and "◎" for a case in which the syrup-like taste was sensed significantly more than that of Comparative Example 1. An amount of amino nitrogen in the respective apple juice-containing alcoholic beverages was measured by a Van Slyke method (a method in which sodium nitrite, acetic acid and a sample solution are charged in a van slyke instrument to produce nitrogen gas, and an amount of amino nitrogen is determined from the amount of produced nitrogen gas). An amount of chlorogenic acids contained was analyzed by high-performance liquid chromatography using samples obtained by addition of perchloric acid and water to the alcoholic beverages and filtration of the mixtures. The results are shown in Table 1.

[Table 1]

| | Comparative Example 1 | | Present Invention 1 | | Present Invention 2 | | Present Invention 3 | |
|---|---|---|---|---|---|---|---|---|
| Granulated sugar | 10.7 | g | 10.7 | g | 0.0 | g | 0.0 | g |
| Citric acid | 0.296 | g | 0.296 | g | 0.0 | g | 0.0 | g |
| Chlorogenic acid 0.5 hydrate (reagent, Wako, first class) | 0.00 | mg | 3.07 | mg | 0.00 | mg | 8.51 | mg |
| Apple juice (clear), 7-fold concentration | 14.3 | g | 14.3 | g | 30.0 | g | 30.0 | g |
| 59 V/V% alcohol (spirits) | 15.25 | ml | 15.25 | ml | 15.25 | ml | 15.25 | ml |
| Water | The total amount was adjusted to 100 ml by use of water | | | | | | | |
| Bx | 22.7 | ˚ | 22.7 | ˚ | 22.7 | ˚ | 22.7 | ˚ |
| Acidity (/100 ml) | 0.57 | g | 0.57 | g | 0.57 | g | 0.57 | g |
| (A) Alcohol concentration (V/V%) | 9 | % | 9 | % | 9 | % | 9 | % |
| (B) Percentage of fruit juice | 100 | % | 100 | % | 210 | % | 210 | % |

(continued)

|  | Comparative Example 1 | | Present Invention 1 | | Present Invention 2 | | Present Invention 3 | |
|---|---|---|---|---|---|---|---|---|
| (C) Amount of amino nitrogen (/100 ml) | 7.0 | mg | 7.0 | mg | 14.7 | mg | 14.7 | mg |
| B/A | 11.11 | | 11.11 | | 23.33 | | 23.33 | |
| (D) Amount of chlorogenic acid (/ 100 ml) | 2.7 | mg | 5.7 | mg | 5.7 | mg | 14.0 | mg |
| Tingling sensation of alcohol | ○ | | ○ | | ◎ | | ◎ | |
| Syrup-like taste | △ | | ○ | | ○ | | ◎ | |

Comparative Example 1 and the present invention product 1 had a percentage of fruit juice (B) of 100%, and the ratio (B/A) to the alcohol (A) was 11.1. The present invention products 2 and 3 had a percentage of fruit juice of 210%, and the ratio to the alcohol was 23.3. The tingling sensation of alcohol was slightly sensed in Comparative Example 1 and the present invention product 1. No tingling sensation of alcohol was sensed in the present invention products 2 and 3. Almost no sweet syrup-like taste of a mature apple was sensed in Comparative Example 1 (total amount of chlorogenic acid: 2.7 mg/100 ml). The sweet syrup-like taste of a mature apple was sensed significantly in the sample prepared by addition of chlorogenic acid to Comparative Example 1 (present invention product 1; total amount of chlorogenic acid: 5.7 mg/100 ml). The level of the sweet syrup-like taste sensed in the sample containing 5.7 mg/100 ml of chlorogenic acid derived from apple juice (present invention product 2) was the same as that of the sweet syrup-like taste sensed in the present invention product 1. The sweet syrup-like taste was sensed more significantly in the sample prepared by addition of chlorogenic acid to the present invention product 2 (present invention product 3; total amount of chlorogen : 14.0 mg/100 ml).

The results demonstrate that when the total amount of chlorogenic acid contained in the high-alcoholic beverage of an apple savor is 5.0 mg/100 ml or larger, the sweet syrup-like taste of a mature apple is sensed according to a concentration of the chlorogenic acid. The results also demonstrate that when the ratio (B/A) of the fruit juice (B) to the alcohol (A) exceeds 11.5, the tingling sensation is no longer sensed.

Example 2 (Apple juice-containing alcoholic beverage)

Concentrated apple juice and alcohol were mixed in amounts specified in Table 2, and water was added such that the total amount of the resulting mixture was 1000 ml. The mixture was charged in a sealed container (glass bottle) and preserved (stored) at room temperature for one day to produce fruit juice-containing alcoholic beverages having an alcohol concentration of 9 to 30 v/v% and a percentage of fruit juice of about 230%, 310%, 430%, and 520%.

Amounts of amino nitrogen and chlorogenic acid in the respective alcoholic beverages were determined as in Example 1. The alcoholic beverages were drunk to conduct sensory evaluation. In the sensory evaluation, 1) the tingling sensation of alcohol and 2) the sweet syrup-like taste of a mature apple were evaluated. The evaluation was conducted using the following ranks based on Comparative Example 1 (percentage of fruit juice: 100%) in Example 1 as a reference: "×" for a case in which more tingling sensation than the reference was sensed (or no syrup-like taste was sensed); "△" for a case in which the level was the same as that of the reference; "○" for a case in which less tingling sensation than the reference was sensed (or the syrup-like taste was slightly sensed); and "◎" for a case in which significantly less tingling sensation than the reference was sensed (or the syrup-like taste was sensed significantly). The results are shown in Table 2 (the upper rows show the results of the sensory evaluation of tingling sensation, and the lower rows show the results of the sensory evaluation of syrup-like taste).

[Table 2]

| Alcohol (95v/v%) | Amount contained | Alcohol concentration (A) | Clear concentrated apple juice Bx 70 (7-fold concentration) | | | |
|---|---|---|---|---|---|---|
| | | | Amount contained 335 g | 450 g | 615 g | 745 g |
| | | | Percentage of fruit juice (B) 230% | 310% | 430% | 520% |
| | | | Amino nitrogen 17 mg/100 mL | 24 mg/100 mL | 32 mg/100 mL | 39 mg/100 mL |
| | | | Chlorogenic acid (/100 mL) 6.2 mg | 8.5 mg | 11.5 mg | 14.0 mg |
| | 315.8 ml | 30 v/v% | × / ◎ 7.67 | × / ◎ 10.3 | △ / ◎ 14.3 | — N.D |
| | 294.7 ml | 28 v/v% | △ / ◎ 8.21 | △ / ◎ 11.1 | ○ / ◎ 15.4 | ○ / ◎ 18.6 |
| | 252.7 ml | 24 v/v% | △ / ◎ 9.58 | ○ / ◎ 12.9 | ○ / ◎ 17.9 | ◎ / ◎ 21.7 |
| | 210.6 ml | 20 v/v% | ○ / ◎ 11.5 | ○ / ◎ 15.5 | ◎ / ◎ 21.5 | ◎ / ◎ 26.0 |
| | 168.5 ml | 16 v/v% | ○ / ◎ 14.4 | ◎ / ◎ 19.3 | ◎ / ◎ 26.9 | ◎ / ◎ 32.5 |
| | 126.4 ml | 12 v/v% | ○ / ◎ 19.2 | ◎ / ◎ 25.8 | ◎ / ◎ 35.8 | ◎ / ◎ 43.3 |
| | 94.8 ml | 9 v/v% | ○ / ◎ 25.6 | ◎ / ◎ 34.4 | ◎ / ◎ 47.8 | ◎ / ◎ 57.8 |

(*the numbers on the lower sections in the table indicate values of B/A)

All the apple juice-containing alcoholic beverages contained 5.0 mg/100 ml or more of chlorogenic acid and had a high concentration of alcohol of 9 v/v% or higher, but had a pleasant sweet syrup-like taste. The tingling sensation of alcohol was eliminated almost completely in the beverages containing the fruit juice that was at least 11.5-fold the alcohol (B/A ≥ 1.5), based on the percentage of fruit juice; especially, when the fruit juice was 300% or higher, based on the percentage of fruit juice, and at least 19.0-fold the alcohol (B/A ≥ 19.0), no tingling sensation was sensed, and a high-alcoholic beverage having a novel savor in which the sweet syrup-like taste was further enhanced by the chlorogenic acid was provided.

Example 3 (Apple juice-containing alcoholic beverage)

An apple juice-containing alcoholic beverage having a percentage of fruit juice of about 420% and an alcohol content of 16 v/v% was prepared by mixing the following ingredients in amounts specified below.

| Clear concentrated apple juice (Bx 70; 7-fold concentration) | 600 g |
| 59 v/v% alcohol (spirits) | 136 ml |
| Rum (59 v/v%) | 136 ml |

The total amount was adjusted to 1000 ml by water

The amount of chlorogenic acid in the alcoholic beverage was 29.4 mg/100 ml. The alcoholic beverage containing the high concentration of chlorogenic acid was preserved at 23°C for seven months, but no change in the savor during the preservation was confirmed, and the sweet syrup-like taste was retained.

Example 4 (Apple juice-containing alcoholic beverage (diluted))

The apple juice-containing alcoholic beverage prepared in Example 3 was diluted with water or carbonated water by 4-fold, by volume, to obtain a dilution-type alcoholic beverage. Similarly to the beverage before the dilution, the beverage that was diluted with water and the beverage that was diluted with carbonated water both had the sweet syrup-like taste of a mature apple and the mellow and deep savor without any tingling sensation of alcohol.

Example 5 (Grapefruit juice-containing alcoholic beverage)

Four kinds of 100-ml grapefruit juice-containing alcoholic beverages having a Brix of 21.0° and an acidity of 1.89 g/100 ml were produced using ingredients and water shown in Table 3 in amounts specified in Table 3 (the grapefruit juice that was used contained 2.1 mg of malic acid per gram). Tingling sensation of alcohol in the respective beverages were evaluated as in Reference Example 2 using the following four ranks: "◎" for a case in which no tingling sensation was sensed; "○" for a case in which almost no tingling sensation was sensed; "△" for a case in which tingling sensation was slightly sensed; and "×" for a case in which tingling sensation was sensed. The ester-like flavor was evaluated using the following four ranks based on Comparative Example 2 as a reference: "×" for a case in which the ester-like flavor was sensed less than that of Comparative Example 2; "△" for a case in which the level was the same as that of Comparative Example 2; "○" for a case in which the ester-like flavor was sensed slightly more than that of Comparative Example 2; and "◎" for a case in which the ester-like flavor was sensed significantly more than that of Comparative Example 2. Amounts of amino nitrogen in the grapefruit juice-containing alcoholic beverages were measured by a Van Slyke method (a method in which sodium nitrite, acetic acid and a sample solution are charged in a van slyke instrument to produce nitrogen gas, and an amount of amino nitrogen is determined from the amount of produced nitrogen gas). An amount of malic acid contained was analyzed by high-performance liquid chromatography. Perchloric acid and water were added to samples, and the mixtures were filtrated, followed by the measurement by high-performance chromatography. The results are shown in Table 3.

[Table 3]

| | Comparative Example 2 | | Present Invention 4 | | Present Invention 5 | | Present Invention 6 | |
|---|---|---|---|---|---|---|---|---|
| Granulated sugar | 8.9 | g | 8.9 | g | 0.0 | g | 0.0 | g |
| Citric acid | 0.987 | g | 0.959 | g | 0.0 | g | 0.0 | g |

EP 2 248 885 A1

(continued)

| | Comparative Example 2 | | Present Invention 4 | | Present Invention 5 | | Present Invention 6 | |
|---|---|---|---|---|---|---|---|---|
| Malic acid | 0.00 | mg | 0.0294 | mg | 0.00 | mg | 0.0958 | mg |
| Grapefruit juice (clear), 7-fold concentration | 14.3 | g | 14.3 | g | 30.0 | g | 30.0 | g |
| 59 V/V% alcohol (spirits) | 15.25 | ml | 15.25 | ml | 15.25 | ml | 15.25 | ml |
| Water | The total amount was adjusted to 100 ml by use of water | | | | | | | |
| Bx | 21.0 | ° | 21.0 | ° | 21.0 | ° | 21.0 | ° |
| Acidity (/100 ml) *based on citric acid | 1.89 | g | 1.89 | g | 1.89 | g | 1.89 | g |
| (A) Alcohol concentration (V/V%) | 9 | % | 9 | % | 9 | % | 9 | % |
| (B) Percentage of fruit juice | 100 | % | 100 | % | 210 | % | 210 | % |
| (C) Amount of amino nitrogen (/100 ml) | 28 | mg | 28 | mg | 60 | mg | 60 | mg, |
| B/A | 11.11 | | 11.11 | | 23.33 | | 23.33 | |
| (D) Malic acid (/100 ml) | 30.0 | mg | 62.0 | mg | 62.0 | mg | 160.0 | mg |
| Tingling sensation of alcohol | ○ | | ○ | | ◎ | | ◎ | |
| Ester-like flavor | △ | | ○ | | ○ | | ◎ | |

The percentages of fruit juice in the table were calculated by the following formula: (Amount of concentrated fruit juice contained (g) x concentration rate)/100 ml x 100. Comparative Example 2 and the present invention product 4 had a percentage of fruit juice (B) of 100%, and the ratio (B/A) to the alcohol (A) was 11.1. The present invention products 5 and 6 had a percentage of fruit juice of 210%, and the ratio to the alcohol was 23.3. The tingling sensation of alcohol was sensed very slightly in Comparative Example 2 and the present invention product 4. No tingling sensation of alcohol was sensed in the present invention products 5 and 6. Almost no ester-like flavor was sensed in Comparative Example 2 (total amount of malic acid: 30.0 mg/100 ml). The ester-like flavor was sensed significantly in the sample prepared by addition of malic acid to Comparative Example 2 (present invention product 4; total amount of malic acid: 62 mg/100 ml). The level of the ester-like flavor sensed in the sample containing malic acid derived from grapefruit juice (present invention product 5; total amount of malic acid: 62 mg/100 ml) was the same as that of the ester-like flavor sensed in the present invention product 4. A fancier ester-like flavor was sensed in the sample prepared by addition of malic acid to the present invention product 5 (present invention product 6; total amount of malic acid: 160 mg/100 ml).

The results suggest that when the total amount of malic acid in the high-alcoholic beverage of a grapefruit savor is 60 mg/100 ml or larger, the fruity and fresh ester-like flavor is sensed according to a concentration of the malic acid. The results also suggest that when the ratio (B/A) of the fruit juice (B) to the alcohol (A) exceeds 11.5, the tingling sensation is no longer sensed, and the ester-like flavor is provided.

The depth, fruitiness and juiciness (succulence) of the beverage increased according to the amount of malic acid added. In the present invention products 2 and 3, a flavor similar to a mature grapefruit was sensed.

Example 6 (Grapefruit juice-containing alcoholic beverage)

Concentrated grapefruit juice and alcohol were mixed in amounts specified in Table 4, and water was added such that the total amount of the resulting mixture was 1000 ml. The mixture was charged in a sealed container (glass bottle) and preserved (stored) at room temperature for one day to produce fruit juice-containing alcoholic beverages having an alcohol concentration of 9 to 30 v/v% and a percentage of fruit juice of about 230%, 310%, 430% and 520%.

The percentages of fruit juice shown in the table were calculated by the following formula: (Amount of concentrated fruit juice contained (g) $\times$ concentration rate)/100 ml $\times$ 100.

Amounts of amino nitrogen and malic acid contained in the respective alcoholic beverages were determined as in Example 5. The alcoholic beverages were drunk to conduct sensory evaluation. In the sensory evaluation, 1) the tingling sensation of alcohol and 2) the ester-like flavor were evaluated. The evaluation was conducted using the following ranks based on Comparative Example 2 (percentage of fruit juice: 100%) in Example 5 as a reference: "×" for a case in which more tingling sensation than the reference was sensed (or no ester-like flavor was sensed); "△" for a case in which the level was the same as that of the reference; "○" for a case in which less tingling sensation than the reference was sensed (or the ester-like flavor was slightly sensed); and "◎" for a case in which significantly less tingling sensation than the reference was sensed (or the ester-like flavor was sensed significantly). The results are shown in Table 4 (the upper rows show the results of the sensory evaluation of tingling sensation, and the lower rows show the results of the sensory evaluation of ester-like flavor).

[Table 4]

| Alcohol (95v/v%) | Amount contained | Alcohol concentration (A) | Clear concentrated grapefruit juice Bx 63 (7-fold concentration) | | | |
|---|---|---|---|---|---|---|
| | | | **Amount contained** 335 g | 445 g | 625 g | 745 g |
| | | | **Percentage of fruit juice (B)** 230% | 310% | 430% | 520% |
| | | | **Amino nitrogen** 66 mg/100 mL | 89 mg/100 mL | 124 mg/100 mL | 148 mg/100 mL |
| | | | **Malic acid (/100 mL)** 70 mg | 90 mg | 127 mg | 150 mg |
| | Amount contained 315.8 ml | 30 v/v% | × / ◎ 7.67 | × / ◎ 10.3 | △ / ◎ 14.3 | — N.D |
| | 294.7 ml | 28 v/v% | △ / ◎ 8.21 | △ / ◎ 11.1 | ○ / ◎ 15.4 | ○ / ◎ 18.6 |
| | 252.7 ml | 24 v/v% | △ / ◎ 9.58 | ○ / ◎ 12.9 | ○ / ◎ 17.9 | ◎ / ◎ 21.7 |
| | 210.6 ml | 20 v/v% | ○ / ◎ 11.5 | ○ / ◎ 15.5 | ◎ / ◎ 21.5 | ◎ / ◎ 26.0 |
| | 168.5 ml | 16 v/v% | ○ / ◎ 14.4 | ◎ / ◎ 19.3 | ◎ / ◎ 26.9 | ◎ / ◎ 32.5 |
| | 126.4 ml | 12 v/v% | ○ / ◎ 19.2 | ◎ / ◎ 25.8 | ◎ / ◎ 35.8 | ◎ / ◎ 43.3 |
| | 94.8 ml | 9 v/v% | ○ / ◎ 25.6 | ◎ / ◎ 34.4 | ◎ / ◎ 47.8 | ◎ / ◎ 57.8 |

(*the numbers on the lower sections in the table indicate values of B/A)

All the grapefruit juice-containing alcoholic beverages contained 60 mg/100 ml or more of malic acid and had a high concentration of alcohol of 9 v/v% or higher, but had a pleasant ester-like flavor. The tingling sensation of alcohol was eliminated almost completely in the beverages containing the fruit juice that was at least 11.5-fold the alcohol (B/A ≥11.5), based on the percentage of fruit juice; especially, when the fruit juice was 300% or higher, based on the percentage of fruit juice, and at least 19.0-fold the alcohol (B/A ≥ 19.0), no tingling sensation was sensed, and a high-alcoholic beverage having a deep flavor similar to a mature fruit in which the ester-like flavor was further enhanced by the malic acid was provided.

Example 7 (Grapefruit juice-containing alcoholic beverage (diluted))

The present invention product 5 prepared in Example 5 was mixed with water such that the product 5 was diluted by 2-fold to obtain a dilution-type beverage. The beverage thus diluted showed the same properties as those of the beverage before the dilution; the diluted beverage was a grapefruit beverage that had the ester-like flavor and a deep flavor similar to a mature fruit without any tingling sensation of alcohol.

Example 8 (Grape juice-containing alcoholic beverage)

Five kinds of 100-ml white grape juice-containing alcoholic beverages having a Brix of 24.6° to 25.0° and an acidity (based on citric acid) of 0.655g/100 ml were produced using ingredients and water shown in Table 5 in amounts specified in Table 5. Tingling sensation of alcohol in the respective beverages was evaluated as in Reference Example 3 using the following four ranks: "◎" for a case in which no tingling sensation was sensed; "○" for a case in which almost no tingling sensation was sensed; "△" for a case in which tingling sensation was slightly sensed; and "×" for a case in which tingling sensation was sensed.
The ester-like flavor was also evaluated using the following four ranks based on Comparative Example 3 as a reference: "×" for a case in which the ester-like flavor was sensed less than that in Comparative Example 3; "△" for a case in which the level was the same as that in Comparative Example 3; "○" for a case in which the ester-like flavor was sensed slightly more than that in Comparative Example 3; and "◎" for a case in which the ester-like flavor was sensed significantly more than that in Comparative Example 3. An amount of amino nitrogen in the respective white grape juice-containing alcoholic beverages was measured by a Van Slyke method (a method in which sodium nitrite, acetic acid and a sample solution are charged in a van slyke instrument to produce nitrogen gas, and an amount of amino nitrogen is determined from the amount of produced nitrogen gas). An amount of potassium ions contained was analyzed by an atomic absorption method (hydrochloric acid extraction method). The results are shown in Table 5.
[Table 5]

| | Comparative Example 3 | | Present Invention 7 | | Present Invention 8 | | Present Invention 9 | | Comparative Example 4 | |
|---|---|---|---|---|---|---|---|---|---|---|
| Granulated sugar | 11.8 | g | 11.8 | g | 0.0 | g | 0.0 | g | 0.0 | g |
| Citric acid | 0.314 | g | 0.314 | g | 0.0 | g | 0.0 | g | 0.0 | g |
| Potassium chloride | 0.0 | mg | 0.03 | mg | 0.0 | mg | 0.18 | mg | 0.42 | mg |
| White grape juice, 6-fold concentration | 16.67 | g | 16.67 | g | 35.00 | g | 35.00 | g | 35.00 | g |
| 59 V/V% alcohol (spirits) | 15.25 | ml | 15.25 | ml | 15.25 | ml | 15.25 | ml | 15.25 | ml |
| Water | The total amount was adjusted to 100 ml by use of water | | | | | | | | | |
| Bx | 24.6 | ° | 24.6 | ° | 24.6 | ° | 24.8 | ° | 25.0 | ° |
| Acidity (/100 ml) | 0.68 | g | 0.66 | g | 0.66 | g | 0.66 | g | 0.66 | g |

(continued)

| | Comparative Example 3 | | Present Invention 7 | | Present Invention 8 | | Present Invention 9 | | Comparative Example 4 | |
|---|---|---|---|---|---|---|---|---|---|---|
| (A) Alcohol concentration (V/V%) | 9 | % | 9 | % | 9 | % | 9 | % | 9 | % |
| (B) Percentage of fruit juice | 100 | % | 100 | % | 210 | % | 210 | % | 210 | % |
| (C) Amount of amino nitrogen (/100 ml) | 3.0 | mg | 3.0 | mg | 6.3 | mg | 6.3 | mg | 6.3 | mg |
| B/A | 11.11 | | 11.11 | | 23.33 | | 23.33 | | 23.33 | |
| (D) Potassium ions (/100 ml) | 15.0 | mg | 33.0 | mg | 33.0 | mg | 125.0 | mg | 250.0 | mg |
| Tingling sensation of alcohol | ○ | | ○ | | ◎ | | ◎ | | ◎ | |
| Ester-like flavor | - | | ◎ | | ◎ | | ○ | | △ to × | |

Comparative Example 3 and the present invention product 7 had a percentage of fruit juice (B) of 100%, and the ratio (B/A) to the alcohol (A) was 11.1. The present invention products 8 and 9 had a percentage of fruit juice of 210%, and the ratio to the alcohol was 23.3. The tingling sensation of alcohol was slightly sensed in Comparative Example 3 and the present invention product 7. No tingling sensation of alcohol was sensed in the present invention products 8 and 9 and Comparative Example 4. Almost no ester-like flavor was sensed in Comparative Example 3 (total amount of potassium ions: 15.0 mg/100 ml). The ester-like flavor was sensed significantly in the sample prepared by addition of the potassium salt to Comparative Example 3 (present invention product 7; total amount of potassium ions: 33.0 mg/100 ml). The level of the ester-like flavor sensed in the sample containing potassium ions derived from white grape juice (present invention product 8; total amount of potassium ions: 33 mg/100 ml) was the same as that sensed in the present invention product 7. The ester-like flavor of the sample obtained by addition of the potassium salt to the present invention product 8 (present invention product 9; total amount of potassium ions: 125 mg/100 ml) was slightly weaker than that of the present invention product 8. The sample obtained by addition of the potassium salt to the present invention product 8 (Comparative Example 4; total amount of potassium ions: 250 mg/100 ml) had strong salty and harsh tastes, and the flavor was not pleasant.

The results suggest that when the total amount of potassium ions in the high-alcoholic beverage of a grape savor is 20 to 200 mg/100 ml (preferably 30 to 150 mg/100 ml), the fruity and fresh ester-like flavor is provided. The results also suggest that when the ratio (B/A) of the fruit juice (B) to the alcohol (A) exceeds 11.1 (11.5 or higher), the tingling sensation is further reduced, and the flavor becomes more pleasant.

The depth, fruitiness and juiciness (succulence) of the beverage increased according to the amount of potassium salt added. In the present invention products 7, 8 and 9, a flavor similar to a mature grape was sensed.

Example 9 (Grape juice-containing alcoholic beverage)

The procedure of Example 8 was repeated, except that a juice of concord grape, which was a red grape, was used as the fruit juice, and ingredients and water shown in Table 6 were used in amounts specified in Table 6 to prepare five kinds of 100-ml grape juice-containing alcoholic beverages having a Brix of 24.6° to 25.0° and an acidity (based on citric acid) of 0.94 g/100 ml. The beverages thus produced were evaluated as in Example 8. The results are shown in Table 6.

[Table 6]

| | Comparative Example 5 | | Present Invention 10 | | Present Invention 11 | | Present Invention 12 | | Comparative Example 6 | |
|---|---|---|---|---|---|---|---|---|---|---|
| Granulated sugar | 11.90 | g | 11.90 | g | 0.0 | g | 0.0 | g | 0.0 | g |
| Citric acid | 0.49 | g | 0.21 | g | 0.0 | g | 0.0 | g | 0.0 | g |
| Potassium chloride | - | mg | 0.014 | mg | 0.0 | mg | 0.12 | mg | 0.36 | mg |
| Concord fruit juice, 6-fold concentration | 16.67 | g | 16.67 | g | 35.00 | g | 35.00 | g | 35.00 | g |
| 59 V/V% alcohol (spirits) | 15.25 | ml | 15.25 | ml | 15.25 | ml | 15.25 | ml | 15.25 | ml |
| Water | The total amount was adjusted to 100 ml by use of water | | | | | | | | | |
| Bx | 24.6 | ° | 24.6 | ° | 24.6 | ° | 24.7 | ° | 25.0 | ° |
| Acidity (/100 ml) | 0.94 | g | 0.94 | g | 0.94 | g | 0.94 | g | 0.94 | g |
| (A) Alcohol concentration (V/V%) | 9 | % | 9 | % | 9 | % | 9 | % | 9 | % |
| (B) Percentage of fruit juice | 100 | % | 100 | % | 210 | % | 210 | % | 210 | % |
| (C) Amount of amino nitrogen (/100 ml) | 23 | mg | 23 | mg | 48 | mg | 48 | mg | 48 | mg |
| B/A | 11.11 | | 11.11 | | 23.33 | | 23.33 | | 23.33 | |
| (D) Potassium ion (/100 ml) | 29.0 | mg | 33.0 | mg | 61.0 | mg | 125.0 | mg | 250.0 | mg |
| Tingling sensation of alcohol | ○ | | ○ | | ◎ | | ◎ | | ◎ | |
| Ester-like flavor | - | | ◎ | | ◎ | | ○ | | △ to × | |

Similarly to the case of using the white grape juice in Example 8, the tingling sensation of alcohol was sensed very slightly in Comparative Example 5 and the present invention product 10. No tingling sensation was sensed in the present invention products 11 and 12 and Comparative Example 6. Almost no ester-like flavor was sensed in Comparative Example 5 (total amount of potassium ions: 29.0 mg/100 ml). The ester-like flavor was sensed significantly in the sample prepared by addition of the potassium salt to Comparative Example 5 (present invention product 10; total amount of potassium ions: 33.0 mg/100 ml). The level of the ester-like flavor sensed in the sample containing potassium ions derived from concord juice (present invention product 11; total amount of potassium ions: 61 mg/100 ml) was the same as that of the ester-like flavor sensed in the present invention product 10. The ester-like flavor of the sample obtained by addition of the potassium salt to the present invention product 11 (present invention product 12; total amount of potassium ions: 125 mg/100 ml) was slightly weaker than that of the present invention product 11. The sample obtained by addition of the potassium salt to the present invention product 11 (Comparative Example 6; total amount of potassium ions: 250 mg/100 ml) had strong salty and harsh tastes, and the flavor was not pleasant.

The results suggest that when the total mount of potassium ions in the high-alcoholic beverage of a grape savor is 30 to 200 mg/100 ml (preferably 30 to 150 mg/100 ml), the fruity and fresh ester-like flavor is provided. The results also suggest that when the ratio (B/A) of the fruit juice (B) to the alcohol (A) exceeds 11.1 (11.5 or higher), the tingling sensation is further reduced, and the flavor becomes more pleasant.

The depth, fruitiness and juiciness (succulence) of the beverage increased according to the amount of potassium salt added. In the present invention products 10, 11 and 12, a flavor similar to a mature grape was sensed.

Example 10 (Grape juice-containing alcoholic beverage)

The procedure of Example 8 was repeated, except that the white grape juice that was used in Example 8 and the juice of concord grape, which was a red grape, that was used in Example 9 were used, and ingredients and water shown in Table 7 were used in amounts specified in Table 7 to prepare five kinds of 100-ml grape juice-containing alcoholic beverages having a Brix of 24.6˚ to 25.0˚ and an acidity (based on citric acid) of 0.80 g/100 ml. The beverages thus produced were evaluated as in Example 8. The results are shown in Table 7.

[Table 7]

|  | Comparative Example 7 | | Present Invention 13 | | Present Invention 14 | | Present Invention 15 | | Comparative Example 8 | |
|---|---|---|---|---|---|---|---|---|---|---|
| Granulated sugar | 11.85 | g | 11.85 | g | 0.0 | g | 0.0 | g | 0.0 | g |
| Citric acid | 0.402 | g | 0.26 | g | 0.0 | g | 0.0 | g | 0.0 | g |
| Potassium chloride | 0.0 | mg | 0.022 | mg | 0.0 | mg | 0.15 | mg | 0.39 | mg |
| Concord fruit juice, 6-fold concentration | 8.34 | g | 8.34 | g | 17.50 | g | 17.50 | g | 17.50 | g |
| White grape juice, 6-fold concentration | 8.34 | g | 8.34 | g | 17.50 | g | 17.50 | g | 17.50 | g |
| 59 V/V% alcohol (spirits) | 15.25 | ml | 15.25 | ml | 15.25 | ml | 15.25 | ml | 15.25 | ml |
| Water | The total amount was adjusted to 100 ml by use of water | | | | | | | | | |
| Bx | 24.6 | ˚ | 24.6 | ˚ | 24.6 | ˚ | 24.8 | ˚ | 25.0 | ˚ |
| Acidity (/100 ml) | 0.80 | g | 0.80 | g | 0.80 | g | 0.80 | g | 0.80 | g |
| (A) Alcohol concentration (V/V%) | 9 | % | 9 | % | 9 | % | 9 | % | 9 | % |
| (B) Percentage of fruit juice | 100 | % | 100 | % | 210 | % | 210 | % | 210 | % |
| (C) Amount of amino nitrogen (/100 ml) | 13 | mg | 13 | mg | 27 | mg | 27 | mg | 27 | mg |
| B/A | 11.11 | | 11.11 | | 23.33 | | 23.33 | | 23.33 | |
| (D) Potassium ions (/100 ml) | 22.0 | mg | 33.0 | mg | 47.0 | mg | 125.0 | mg | 250.0 | mg |

(continued)

| | Comparative Example 7 | Present Invention 13 | Present Invention 14 | Present Invention 15 | Comparative Example 8 |
|---|---|---|---|---|---|
| Tingling sensation of alcohol | ○ | ○ | ◎ | ◎ | ◎ |
| Ester-like flavor | - | ◎ | ◎ | ○ | △ to × |

Similarly to the case of using the white grape juice in Example 8 and the case of using the concord juice in Example 9, the tingling sensation of alcohol was slightly sensed in Comparative Example 7 and the present invention product 13. No tingling sensation was sensed in the present invention products 14 and 15 and Comparative Example 8. Almost no ester-like flavor was sensed in Comparative Example 7 (total amount of potassium ions: 22.0 mg/100 ml). The ester-like flavor was sensed significantly in the sample prepared by addition of the potassium salt to Comparative Example 7 (present invention product 13; total amounts of potassium ions 33.0 mg/100 ml). The level of the ester-like flavor sensed in the sample containing potassium ions derived from grape juice (present invention product 14; total amounts of potassium ions 47 mg/100 ml) was the same as the ester-like flavor sensed in the present invention product 13. The ester-like flavor of the sample obtained by addition of the potassium salt to the present invention product 14 (present invention product 15; total amount of potassium ions: 125 mg/100 ml) was slightly weaker than that of the present invention product 13. The sample obtained by addition of the potassium salt to the present invention product 14 (Comparative Example 8; total amount of potassium ions: 250 mg/100 ml) had strong salty and harsh tastes, and the flavor was not pleasant.

The results suggest that when the total amount of potassium ions in the high-alcoholic beverage of a grape savor is 30 to 200 mg/100 ml (preferably 30 to 150 mg/100 ml), the fruity and fresh ester-like flavor is provided. The results also suggest that when the ratio (B/A) of the fruit juice (B) to the alcohol (A) exceeds 11.1 (11.5 or higher), the tingling sensation is further reduced, and the flavor becomes more pleasant.

The depth, fruitiness and juiciness (succulence) of the beverage increased according to the amount of potassium salt added. In the present invention products 13, 14 and 15, a flavor similar to a mature grape was sensed.

Example 11 (Grape juice-containing alcoholic beverage)

Clear concentrated white grape juice and alcohol were mixed in amounts specified in Table 8, and water was added such that the total amount of the resulting mixture was 1000 ml. The mixture was charged in a sealed container (glass bottle) and preserved (stored) at room temperature for one day to produce grape juice-containing alcoholic beverages having an alcohol concentration of 9 to 30 v/v% and a percentage of fruit juice of about 230%, 310%, 430% and 520%.

Amounts of amino nitrogen and potassium ions in the respective alcoholic beverages were determined as in Example 8. The alcoholic beverages were drunk to conduct sensory evaluation. In the sensory evaluation, 1) the tingling sensation of alcohol and 2) the ester-like flavor were evaluated. The evaluation was conducted using the following ranks based on Comparative Example 3 (percentage of fruit juice: 100%) in Example 8 as a reference: "×" for a case in which more tingling sensation than the reference was sensed (or no ester-like flavor was sensed); "△" for a case in which the level was the same as that of the reference; "○" for a case in which less tingling sensation than the reference was sensed (or the ester-like flavor was slightly sensed); and "◎" for a case in which significantly less tingling sensation than the reference was sensed (or the ester-like flavor was sensed significantly). The results are shown in Table 8 (the upper rows show the results of the sensory evaluation of tingling sensation, and the lower rows show the results of the sensory evaluation of ester-like flavor).

[Table 8]

| | Amount contained / Alcohol concentration (A) | | Clear concentrated white grape juice Bx 66 (6-fold concentration) | | | |
|---|---|---|---|---|---|---|
| | | | Amount contained 390 g | 525 g | 720 g | 870 g |
| | | | Percentage of fruit juice (B) 230% | 310% | 430% | 520% |
| | | | Amino nitrogen 8 mg/100 mL | 12 mg/100 mL | 16 mg/100 mL | 19 mg/100 mL |
| | | | Potassium ion (/100 mL) 35 mg | 50 mg | 68 mg | 80 mg |
| Alcohol (95 v/v%) | Amount contained 315.8 ml | Alcohol concentration (A) 30 v/v% | × ◎ 7.67 | × ◎ 10.3 | △ ◎ 14.3 | — N.D |
| | 294.7 ml | 28 v/v% | △ ◎ 8.21 | △ ◎ 11.1 | ○ ◎ 15.4 | ○ ◎ 18.6 |
| | 252.7 ml | 24 v/v% | △ ◎ 9.58 | ○ ◎ 12.9 | ○ ◎ 17.9 | ◎ ◎ 21.7 |
| | 210.6 ml | 20 v/v% | ○ ◎ 11.5 | ○ ◎ 15.5 | ◎ ◎ 21.5 | ◎ ◎ 26.0 |
| | 168.5 ml | 16 v/v% | ○ ◎ 14.4 | ◎ ◎ 19.3 | ◎ ◎ 26.9 | ◎ ◎ 32.5 |
| | 126.4 ml | 12 v/v% | ○ ◎ 19.2 | ◎ ◎ 25.8 | ◎ ◎ 35.8 | ◎ ◎ 43.3 |
| | 94.8 ml | 9 v/v% | ○ ◎ 25.6 | ◎ ◎ 34.4 | ◎ ◎ 47.8 | ◎ ◎ 57.8 |

(*the numbers on the lower sections in the table indicate values of B/A)

All the grape juice-containing alcoholic beverages contained 30 mg/100 ml or more of potassium ions and had a high concentration of alcohol of 9 v/v% or higher, but had a pleasant ester-like flavor. The tingling sensation of alcohol was eliminated almost completely in the beverages containing the fruit juice that was at least 11.5-fold the alcohol (B/A $\geq$ 11.5), based on the percentage of fruit juice; especially, when the fruit juice was 300% or higher, based on the percentage of fruit juice, and at least 19.0-fold the alcohol (B/A $\geq$ 19.0), no tingling sensation was sensed, and a high-alcoholic beverage having a deep flavor similar to a mature fruit in which the ester-like flavor was further enhanced by potassium ions was provided.

Example 12 (Grape juice-containing alcoholic beverage)

A grape juice-containing alcoholic beverage having a percentage of fruit juice of about 420% and an alcohol concentration of 16 v/v% was prepared by mixing the following ingredients in amounts specified below. The amount of potassium ions in the alcoholic beverage was 137 mg/100 ml. The alcoholic beverage containing the high concentration of potassium ions was preserved at room temperature, 23˚C, for seven months, but no change in the savor during the preservation was confirmed, and no precipitation of a precipitate or the like was observed.

| | |
|---|---|
| Clear concentrated white grape juice (6-fold concentration) | 350 g |
| Concentrated red grape juice (6-fold concentration) | 350 g |
| 59 v/v% alcohol (spirits) | 136 ml |
| 59 v/v% brandy Flavoring | 136 ml |
| | Total 1000 ml |

Example 13 (Grape juice-containing alcoholic beverage (diluted))

A diluent solution (water or carbonated water) was mixed with the grape juice-containing alcoholic beverage prepared in Example 12 to dilute the beverage by 4-fold, whereby a dilution-type alcoholic beverage was obtained. The beverage thus diluted showed the same properties as those of the beverage before the dilution; the diluted beverage was an alcoholic beverage of a grape savor that had the fruity and fresh ester-like flavor and was mellow and deep like a mature grape without any tingling sensation of alcohol.

**Claims**

1.  A fruit juice-containing alcoholic beverage having an alcohol content of 9 v/v% or higher, wherein the fruit juice is one of apple juice, grapefruit juice and grape juice, and the fruit juice-containing alcoholic beverage contains: (A) 5.0 mg/100 ml or more of chlorogenic acids when the fruit juice is apple juice; (B) 60 mg/100 ml or more of malic acid when the fruit juice is grapefruit juice; or (C) 30 mg/100 ml or more of potassium ions when the fruit juice is grape juice.

2.  The fruit juice-containing alcoholic beverage of Claim 1, wherein the fruit juice is contained in an amount of 100% or more, based on a percentage of fruit juice.

3.  The fruit juice-containing alcoholic beverage of Claim 1 or 2, wherein a ratio (B/A) of (B) a percentage of fruit juice (%) to (A) an alcohol concentration (v/v%) in the beverage is 11.5 or higher.

4.  The fruit juice-containing alcoholic beverage of any one of Claims 1 to 3, wherein the fruit juice is apple juice, and the chlorogenic acids are added in the form of a fruit juice extract or a concentrate.

5.  The fruit juice-containing alcoholic beverage of any one of Claims 1 to 3, wherein the fruit juice is grapefruit juice, and the malic acid is added in the form of a fruit juice extract or a concentrate.

6.  The fruit juice-containing alcoholic beverage of any one of Claims 1 to 3, wherein the fruit juice is grape juice, and the potassium ion is added in the form of a fruit juice extract or a concentrate.

7. A dilution-type alcoholic beverage obtained by dilution of the alcoholic beverage of any one of Claims 1 to 6 with a diluent solution.

<table>
<tr><td colspan="2" align="center">**INTERNATIONAL SEARCH REPORT**</td><td colspan="2">International application No.<br>PCT/JP2009/052842</td></tr>
</table>

A. CLASSIFICATION OF SUBJECT MATTER
*C12G3/04*(2006.01)i

According to International Patent Classification (IPC) or to both national classification and IPC

B. FIELDS SEARCHED

Minimum documentation searched (classification system followed by classification symbols)
C12G3/00-3/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)
JSTPlus/JMEDPlus/JST7580(JDreamII), BIOSIS/MEDLINE/WPIDS(STN)

C. DOCUMENTS CONSIDERED TO BE RELEVANT

| Category* | Citation of document, with indication, where appropriate, of the relevant passages | Relevant to claim No. |
|---|---|---|
| Y | JP 55-141188 A (Suntory Ltd.),<br>04 November, 1980 (04.11.80)<br>(Family: none) | 1-7 |
| Y | JP 8-23939 A (San-Ei Gen F.F.I., Inc.),<br>30 January, 1996 (30.01.96)<br>(Family: none) | 1-7 |
| Y | SIMS, C.H., et al., "Stability of non-<br>pasteurized, refrigerated Muscadine grape<br>juice." J.Food Sci., 1995, Vol.60, No.3,<br>p.506-508 | 1-7 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>17 April, 2009 (17.04.09) | Date of mailing of the international search report<br>28 April, 2009 (28.04.09) |
|---|---|
| Name and mailing address of the ISA/<br>Japanese Patent Office | Authorized officer |
| Facsimile No. | Telephone No. |

Form PCT/ISA/210 (second sheet) (April 2007)

**EP 2 248 885 A1**

| | INTERNATIONAL SEARCH REPORT | International application No. |
|---|---|---|
| | | PCT/JP2009/052842 |

C (Continuation).   DOCUMENTS CONSIDERED TO BE RELEVANT

| Category* | Citation of document, with indication, where appropriate, of the relevant passages | Relevant to claim No. |
|---|---|---|
| Y | Hideaki OTA et al., "Noshuku Kangen Budo Kaju Chu no Shuyo Yukisan Oyobi Kalium Ganryo", Journal of the Japanese Society for Food Science and Technology, 1985, Vol.32, No.11, pages 811 to 813 | 1-7 |
| Y | JP 2004-236582 A  (Takara Shuzo Co., Ltd.), 26 August, 2004 (26.08.04) (Family: none) | 1-7 |
| Y | JP 2003-210137 A  (San-Ei Gen F.F.I., Inc.), 29 July, 2003 (29.07.03) (Family: none) | 1-7 |
| A | JP 63-52864 A  (The Procter & Gamble Co.), 07 March, 1988 (07.03.88) & US 4722847 A           & EP 244903 A1 & DE 244903 T           & PH 23972 A & FI 872007 A           & EG 18049 A & CA 1325130 A          & AT 55042 T & PH 27164 A           & GR 3000729 T | 1-7 |
| A | MOZAZ, S.R., et al., "Influence of decantation of viura must on the cation content. Evolution during wine fermentation and stabilization." Food Res.Int., 1999, Vol.32, p.683-689 | 1-7 |
| A | Shin'ichi SUEMATSU et al., "Kaju Iri Seiryo Inryo no Tosan Hi to Shikosei", The Canners Journal, 1993, Vol.72, No.10, page 88 to 93 | 1-7 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006271273 A
- JP 8224075 A
- JP 2003289824 A
- JP 2003204779 A
- JP 10313849 A
- JP 2005192473 A
- JP 2003210154 A
- JP 2008095068 A

**Non-patent literature cited in the description**

- Shadanhojin Nihon Kaju Kyokai. Kaju/kajitsuinryo jiten. Asakura Publishing Co., Ltd, 1997, 145